# EUROPEAN PATENT APPLICATION

(11) **EP 2 669 096 A1**
(43) Date of publication of application: **04.12.2013**
(21) Application number: 13164664.8
(22) Date of filing: 22.04.2013
(51) Int. Cl.: B60B 27/00, B60B 27/02, F16C 35/077

(54) **A hub-bearing assembly for a vehicle wheel**

(30) Priority: 23.04.2012 IT TO20120360
(71) Applicant: Aktiebolaget SKF, 41550 Göteborg (SE)
(72) Inventor: Konrad, Uwe, D-97332 Volkach (DE)
(74) Representative: Tedeschini, Luca

(57) **Abstract**

A hub-bearing assembly for a vehicle wheel, the assembly being provided with at least one annular metal element (12, 14) having an axial tubular appendage (17, 21) adapted for being fitted into a central bore of a wheel or a bore of a suspension upright of the vehicle, wherein the tubular appendage has a cylindrical outer surface (18, 22) with an annular groove (26, 27); the assembly also being provided with a sleeve (30, 31) of plastic material, which is mounted on the tubular appendage (17, 21) so as to cover the outer cylindrical surface (18, 22) and has an inner cylindrical surface (34, 35) with a radially inwardly protruding relief (32, 33) which snap-engages in the annular groove (26, 27) so as to axially lock the sleeve (30, 31) on the tubular appendage (17, 21).

## Description

### TECHNICAL FIELD OF THE INVENTION

The present invention relates to a hub-bearing assembly for a vehicle wheel.

Hub-bearing assemblies for the wheel of a motor-vehicle are known, in which assemblies a hub forms a tubular appendage projecting from the axially outer side of the hub and having an outer cylindrical surface for centring the wheel. The hub also forms a radially extending flange having formed therein axial through-holes for fixing bolts by means of which the wheel is fixed to the hub.

In many hub-bearing assemblies, the outer stationary ring of the bearing assembly has a tubular appendage which projects from the axially inner side of the bearing and which has an outer cylindrical surface which is inserted into a receiving bore formed in the upright of one of the vehicle's suspensions. Usually the outer ring of the bearing forms a radially outer flange in which holes suitable for receiving bolts for fixing the bearing to the upright are formed.

When two metal parts come into contact with each other, the presence of moisture and/or oxygen in the air is frequently the cause of oxidation and corrosion, for example galvanic corrosion, which occurs both at the interface of the surface of the hub for centring the wheel and at the interface of the surface of the outer ring and the corresponding opening in the upright where the outer ring of the bearing is fixed. In such cases, the two metal parts making contact (wheel and bearing on the axially outer (outboard) side or bearing and upright on the axially inner (inboard) side) tend to adhere firmly and risk being damaged when they are separated with force from each other during maintenance operations.

In order to prevent the aforementioned drawback, different protection methods have been proposed. A first known method consists in depositing anti-oxidant materials, typically paints, which solidify upon exposure to air or as a result of ultraviolet light sources, these being applied onto the outer cylindrical surfaces of the aforementioned tubular appendages. In other cases, metal sleeves coated with stainless material have been applied on the cylindrical surfaces to be protected, being applied by means of radial interference on the tubular appendages.

The application of paints is time-consuming and therefore is not compatible with production processes which require high speeds, in particular if drying or solidification of the paint takes place by exposure to air. If the solidification process is accelerated by using ultraviolet light, costly investment is required. The application of sleeves, moreover, requires the construction of special equipment for each product, depending on the diameter and the axial dimension of the surface to be covered. Coated metal sleeves are particularly costly.

In yet further cases, grease based on mineral oil is applied to the interface of the contact surfaces, which may result in environmental pollution and cause soiling.

### SUMMARY OF THE INVENTION

The object of the invention is to protect in a simple, low-cost and efficient manner the aforementioned cylindrical surfaces (or centring surfaces), overcoming the drawbacks discussed hereinabove. A further object is to provide a protective covering which can be applied rapidly.

This object is achieved, according to the present invention, by a hub-bearing assembly according to Claim 1. Preferred embodiments of the invention are defined in the dependent claims.

### BRIEF DESCRIPTION OF THE DRAWINGS

A number of preferred, but non-limiting embodiments of the invention will now be described with reference to the accompanying drawings in which:
Figure 1 is an axially sectioned view of a hub-bearing assembly according to an embodiment of the invention;
Figure 2 is an enlarged view of the detail indicated by II in Figure 1;
Figure 3 is an enlarged view of the detail indicated by III in Figure 1;
Figure 4 is an axially sectioned view of a sleeve of plastic material forming part of the assembly shown in Figure 1;
Figure 5 is an enlarged view of the detail indicated by V in Figure 4; and
Figure 6 is an axially sectioned view of assembly of a sleeve on an annular element of a hub-bearing assembly, according to a further embodiment of the invention.

### DETAILED DESCRIPTION

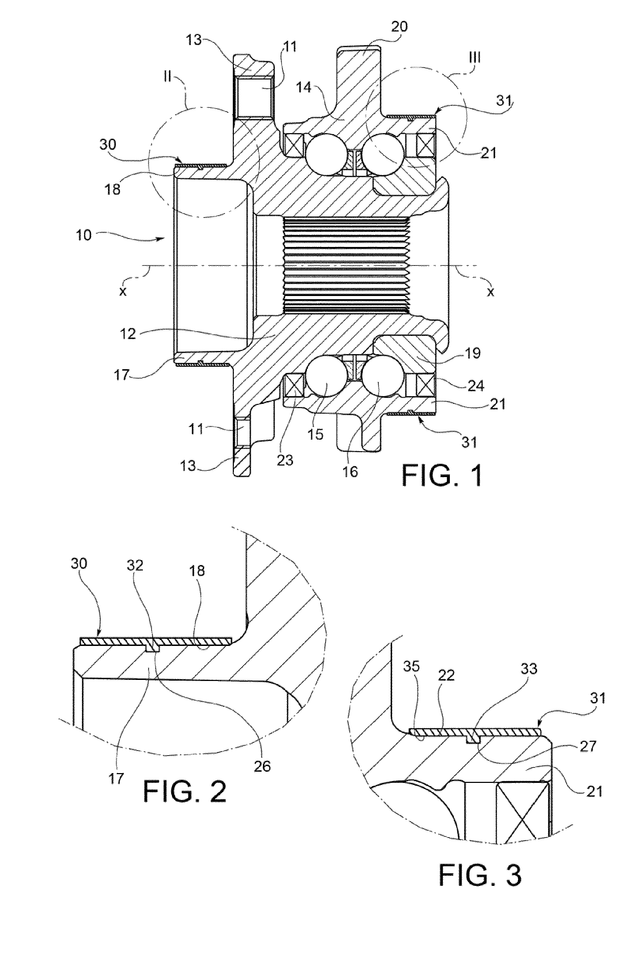

With reference initially to Figure 1, a hub-bearing assembly is shown overall by 10. The assembly 10 is used to mount rotatably a wheel (not shown) on an upright (not shown) of the vehicle suspension, about a central axis of rotation x. Throughout the present description and in the claims, terms and expressions indicating positions and directions, such as "radial" and "axial", are to be understood as referring to the axis of rotation x of the hub-bearing assembly. Expressions such as "axially inner" and "axially outer" are instead understood as referring to the condition mounted on the vehicle.

The hub-bearing assembly 10 includes a flanged hub 12 rotatable about the axis x, a flange 13 integral with the flanged hub 12 and transverse to the axis x, a stationary ring 14 arranged radially on the outside of the hub 12, and two ring arrangements 15, 16 of rolling members, in this case bearing balls, arranged between the outer stationary ring and the flanged hub. The invention is not to be regarded as being limited to this configuration and may in particular be implemented also in hub-bearing assemblies having rolling members with a different form, for example tapered rollers.

The flanged hub 12 and the outer stationary ring 14 are two annular elements made of metal, typically steel, which are respectively connected to the wheel and to the upright of the suspension. The flange 13 has formed therein axial through-holes 11 for receiving fixing bolts (not shown) by means of which a wheel (not shown) is fixed to the hub.

The hub 12 forms a tubular appendage 17 - also known as "spigot" - which projects from the axially outer side of the hub beyond the flange 13. The tubular appendage 17 has a radially outer surface 18 of substantially cylindrical shape suitable for forming a wheel centring surface. The tubular appendage 17 is intended to be fitted into a central bore of the wheel, in a manner known *per se*. In the present example, the appendage 17 is formed together with the hub 12 as one piece. In other embodiments (not shown) the tubular appendage 17 is formed by a separate tubular element which is joined to the remainder of the hub so as to be fastened thereto or integral therewith.

The radially outer surface 18 of the tubular appendage 17 has an annular groove 26. The hub-bearing assembly 10 comprises a first sleeve 30 of plastic material, with a cylindrical tubular shape, which is mounted on the tubular appendage 17 so as to cover the radially outer cylindrical surface 18. The sleeve 30 has a radially inner cylindrical surface 34 which forms a radially inwardly protruding relief 32. The relief 32, which is preferably annular, snap-engages in the annular groove 26 so as to axially lock the sleeve 30 on the tubular appendage 17.

The stationary outer ring 14 of the bearing forms, in a manner known *per se,* a flange 20 which extends radially outwards. The flange 20 has formed therein holes (not shown) suitable for receiving bolts (not shown) by means of which the hub-bearing assembly is fixed to the upright (not shown) of the vehicle suspension. The outer stationary ring 14 forms a tubular appendage 21 which projects from the axially inner side of the bearing, i.e. from the side which during use is directed towards the inside of the vehicle. The tubular appendage 21 has a radially outer surface 22, of substantially cylindrical shape, suitable for being fitted into a receiving bore (not shown) formed in the upright of the suspension.

In the embodiment shown, the hub-bearing assembly 10 comprises a second sleeve 31 of plastic material, with a cylindrical tubular shape, which is mounted on the tubular appendage 21 so as to cover the outer cylindrical surface 22. The sleeve 31 has a radially inner cylindrical surface 35 which forms a radially inwardly protruding relief 33. The outer cylindrical surface 22 of the tubular appendage 21 has an annular groove 27. The relief 33, which is preferably annular, snap-engages in the annular groove 27 so as to axially lock the sleeve 31 on the tubular appendage 21.

The two similar sleeves 30, 31 of plastic material thus cover the metal surfaces of the tubular appendages 17, 21, protecting them from oxidation caused by atmospheric agents and corrosion, including galvanic corrosion. It should be noted that the sleeves, if necessary, may be replaced at a minimum cost during a maintenance operation. Should a sleeve break into two or more pieces owing to ageing of the plastic, it will nevertheless remain in position on the respective tubular appendage, owing to the engagement of the reliefs 32, 33 in the grooves 26, 27.

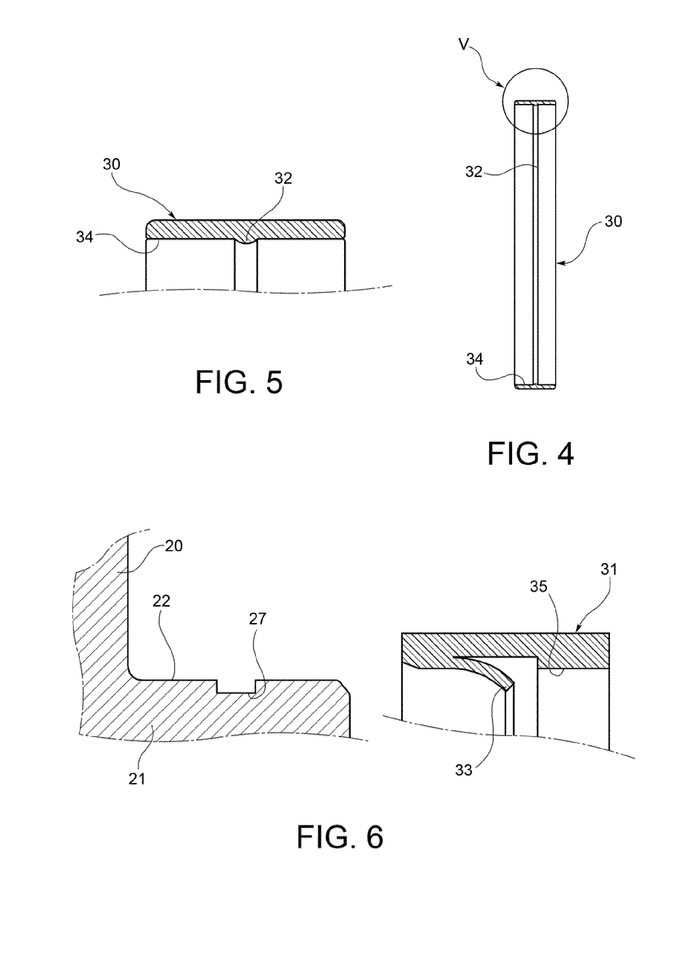

In the embodiment shown in Figure 5 the relief 32 is preferably rounded so as to facilitate mounting thereof by means of snap-engagement inside the groove 26. The reliefs 32, 33 may have various forms, provided that they ensure axial locking of the associated sleeve 30 or 31 on the respective annular element (the hub 12 or the stationary outer ring 14) where the sleeve must be mounted. In the example shown in Figure 6, the relief 33 has the form of an elastically flexible tab tapered towards the free end of the appendage 21, so as to prevent sliding of the sleeve away from the flange 20. A similar tab-like configuration is also applicable to the relief 32. The reliefs 32, 33 may be circumferentially continuous or discrete.

Although Figure 1 shows an exemplary embodiment in which two covering sleeves 30 and 31 are provided, it will be appreciated that the invention may also be implemented using a single sleeve 30 or 31 which covers only one tubular appendage 17 or 21.

The embodiments shown constitute examples and are not to be regarded as limiting in any way the scope, applicability or configuration. The drawings and the detailed description provided above, instead, will provide persons skilled in the art with a convenient guide for implementing the invention, it being understood that various modifications may be made to the configuration of the parts described in the examples of embodiments, without departing from the scope of the invention as defined in the accompanying claims and their legal equivalents.

## Claims

1. A hub-bearing assembly for a vehicle wheel, the assembly comprising at least one annular metal element (12, 14) provided with an axial tubular appendage (17, 21) adapted for being fitted into a central bore of a wheel or a bore of a suspension upright of the vehicle and wherein the tubular appendage (17, 21) has a radially outer surface (18, 22) of substantially cylindrical shape; **characterized in that**
the radially outer surface (18, 22) has an annular groove (26, 27) and that
the assembly further comprises at least one sleeve (30, 31) of plastic material, the sleeve having a cylindrical tubular shape and being mounted on the tubular appendage (17, 21) so as to cover the radially outer cylindrical surface (18, 22) and having a radially inner cylindrical surface (34, 35) with a radially inwardly protruding relief (32, 33) which snap-engages in the annular groove (26, 27) so as to axially lock the sleeve (30, 31) on the tubular appendage (17, 21).

2. A hub-bearing assembly according to Claim 1, wherein the annular metal element is a rotatable hub (12) which can be fixed to a wheel, and the tubular appendage (17) is a centring tubular projection adapted for being fitted into a central bore of the wheel.

3. A hub-bearing assembly according to Claim 1 or 2, wherein the annular element is a stationary bearing ring (14) which can be fixed to a suspension upright of a vehicle, and the tubular appendage (21) is a centring tubular projection suitable for being fitted in a bore of the upright.

4. A hub-bearing assembly according to any one of Claims 1 to 3, **characterized in that** the relief (32, 33) is rounded so as to facilitate mounting thereof by means of snap-engagement inside the respective groove (26, 27).

5. A hub-bearing assembly according to any one of Claims 1 to 3, **characterized in that** the relief (32, 33) is shaped as an elastically flexible tab.

6. A hub-bearing assembly according to Claim 5, **characterized in that** the tab is tapered towards a free end of the tubular appendage (17, 21).

7. A hub-bearing assembly according to any one of Claims 1 to 6, **characterized in that** the relief (32, 33) is circumferentially continuous.

8. A hub-bearing assembly according to any one of Claims 1 to 6, **characterized in that** the relief (32, 33) is circumferentially discrete.
